# EUROPEAN PATENT SPECIFICATION

(11) **EP 3 725 185 B1**
(45) Date of publication and mention of the grant of the patent: **24.05.2023**
(21) Application number: 20169183.9
(22) Date of filing: 10.04.2020
(51) Int. Cl.: A47B 87/00, F16B 1/00, A47B 13/10

(54) **TABLE AND CONNECTION DEVICE FOR TABLES**
TISCH UND ANSCHLUSSVORRICHTUNG FÜR TISCHE
TABLE ET DISPOSITIF DE CONNEXION POUR TABLES

(30) Priority: 17.04.2019 IT 201900005998
(43) Date of publication of application: 21.10.2020
(73) Proprietor: Ares Line S.p.A., 36010 Carré (VI) (IT)
(72) Inventor: DI BLASI, Ottavio, 20154 Milano (MI) (IT)
(74) Representative: Ziliotto, Tiziano

(56) References cited:
- DE-A1- 3 610 232
- KR-A- 20120 125 765
- KR-A- 20130 139 720
- US-A1- 2005 079 312
- US-A1- 2006 180 055
- US-A1- 2013 092 061

## Description

### TECHNICAL FIELD OF THE INVENTION

The present invention concerns the furniture sector. More specifically, the present invention concerns the sector of the manufacture of tables.

In greater detail, the present invention concerns the systems for connecting two or more tables.

### DESCRIPTION OF THE STATE OF THE ART

In various situations in everyday life the need arises to prepare two or more tables placed side by side and/or aligned in order to increase the surface area of the support/work surface.

For example, the need may arise to prepare a large table for a meeting, for a banquet, or to create a large work surface in technical offices, open spaces etc. According to the known technique, two or more tables, generally rectangular in shape, are positioned side by side/placed against each other along the respective lateral edges.

The joining of several tables according to the known art poses the drawback that it is difficult to maintain the tables in their mutual position, as undesired slits are often created between the facing edges of two adjacent tables.

It is the object of the present invention to overcome said drawback.

More specifically, it is a first object of the invention to provide a system that, compared to the systems known in the art, makes it possible to facilitate the operations required to join/assemble several tables.

It is another object of the invention to provide a system that, compared to the systems known in the art, makes it possible to facilitate the operations required to disassemble and reassemble several tables.

Tables configured for mutual connection are known, for instance, by DE 36 10 232 A1, KR 2012 0125765 A, KR 2013 0139720 A, and US 2013/092061 A1.

### SUMMARY OF THE PRESENT INVENTION

The present invention, which is defined by the claims, is based on the general consideration that it is possible to make a table provided with at least one first magnetic element and at least one second magnetic element or at least one ferromagnetic element.

According to the invention the same concerns a table and a connection device suited to be applied to the top of the table in order to allow said table to be connected to another table, wherein the device comprises:
- at least one first magnetic element;
- at least one second magnetic element or at least one ferromagnetic element;
- a supporting element for said at least one first magnetic element, said at least one second magnetic element or said ferromagnetic element.

According to a preferred embodiment, the first magnetic element is positioned on the supporting element in such a way that it has the positive polarity or the negative polarity facing towards the outside with respect to the top when the device is installed on the top.

According to a preferred embodiment, the second magnetic element is positioned on the supporting element in such a way that it has, towards the outside of the top, polarity opposite to the polarity of said first magnetic element towards the outside with respect to said top, when the device is installed on said top. According to a preferred embodiment, the device comprises anti slide means suited to prevent said perimeter edge from sliding with respect to the perimeter edge of another table, when said device is installed on said top.

Preferably, said anti slide means comprise a portion that projects from said supporting element or a portion that is recessed into said supporting element.

In a preferred embodiment, said projecting portion comprises an external portion of said first magnetic element and/or a projecting portion of said at least one ferromagnetic element and/or an external portion of said second magnetic element.

According to a preferred embodiment, the device comprises return means for said first magnetic element and/or said second magnetic element which are suited to bring said first magnetic element and/or said second magnetic element to a retracted position with respect to said supporting element.

According to a preferred embodiment, said return means comprise elastic return means, preferably a helical spring.

The supporting element of the device is preferably of the non-ferromagnetic type, preferably made of a non-ferromagnetic metal, more preferably made of aluminium.

According to the invention, said supporting element comprises a first portion suited to adhere to a perimeter edge of said top and a second portion suited to at least partially extend over an upper support surface of said top.

In a preferred embodiment, the supporting element comprises at least one recessed seat defined in said second portion.

Preferably, the recessed seat comprises a cylindrical hole.

### BRIEF DESCRIPTION OF THE DRAWINGS

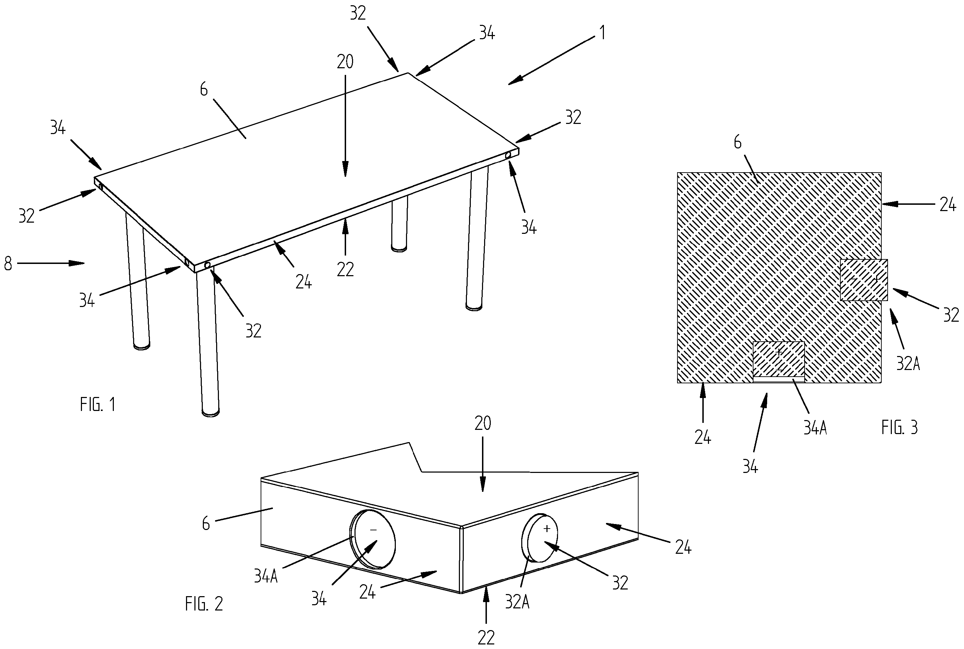

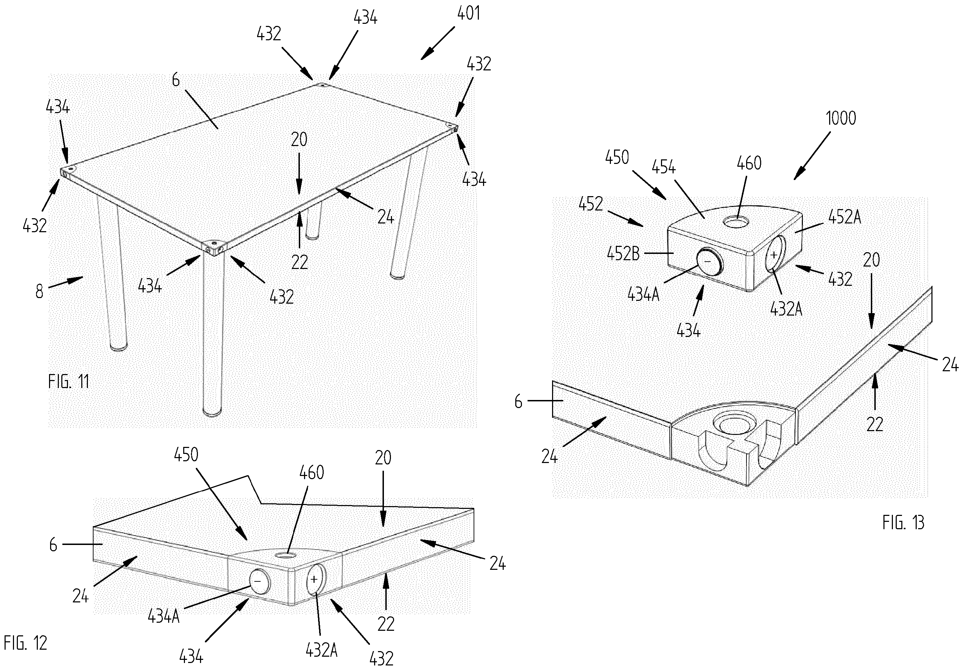

Further advantages, objects and characteristics, as well as further embodiments of the present invention are defined in the claims and highlighted here below through the following description, in which reference is made to the attached drawings; in the drawings, corresponding or equivalent characteristics and/or component parts of the present invention are identified by the same reference numbers. Figures 1 to 10 and figures 17 to 20 show examples not according to the invention. Figures 11 to 16 show embodiments according to the present invention. In particular, in the figures:
- Figure 1 shows an axonometric view of a table according to an example;
- Figure 2 shows an enlarged detail of Figure 1;
- Figure 2A shows a variant embodiment of Figure 2;
- Figure 3 shows a sectional view of Figure 2 along a horizontal section plane;
- Figure 3A shows a variant embodiment of Figure 3;
- Figure 4 shows an assembly comprising four tables of the type shown in Figure 1;
- Figure 5 shows a sectional view of the central joining area of the assembly illustrated in Figure 4;
- Figure 6 shows a variant example of Figure 1;
- Figure 7 shows an enlarged detail of Figure 6;
- Figure 8 shows a detail of a sectional view along a horizontal section plane in a joining area between two tables of the type shown in Figure 6;
- Figure 9 shows another variant embodiment of Figure 1;
- Figure 10 shows an enlarged detail of Figure 9;
- Figure 11 shows an embodiment according to the present invention;
- Figure 12 shows an enlarged detail of Figure 11;
- Figure 13 shows a partially exploded view of the detail illustrated in Figure 12;
- Figure 13A shows an exploded view of a detail of Figure 13 according to a first point of view;
- Figure 13B shows the elements of Figure 13A according to another point of view;
- Figure 14 shows an assembly comprising 4 tables according to the embodiment illustrated in Figure 11;
- Figure 15 shows an enlarged detail of Figure 14;
- Figure 16 shows the assembly illustrated in Figure 14 in one of its possible uses;
- Figure 17 shows an assembly comprising several tables according to an example not according to the present invention;
- Figure 18 shows an enlarged detail of Figure 17;
- Figure 19 shows a top view of several tables according to an example not according to the present invention;
- Figure 20 shows an assembly comprising the tables of Figure 19.

### DETAILED DESCRIPTION OF THE PRESENT INVENTION

Even though the present invention is described here below with reference to its preferred embodiments illustrated in the drawings, the present invention is not limited to the embodiments described below and illustrated in the drawings. On the contrary, the embodiments described and illustrated herein clarify some aspects of the present invention, the scope of which is defined in the claims.

The present invention has proved to be particularly advantageous with reference to the construction of an office table, for example a desk or a drawing table. It should, however, be noted that the present invention is not limited to this type of table. On the contrary, the present invention can be conveniently applied to all types of tables.

Figure 1 shows a table 1 according to an example.

The table 1 comprises a top 6 and a supporting structure 8 for said top 6. The supporting structure 8 according to the embodiment shown in the figures preferably comprises 4 legs substantially arranged at the corners of the top 6.

In variant embodiments, the supporting structure can be made in a different way according to the known art.

According to the example shown in the figures, the top 6 is preferably rectangular in shape.

The top 6 comprises an upper support surface 20, an underside 22 and a perimeter edge 24 that joins the upper surface 20 to the underside 22.

According to an example, the table 1 comprises at least one magnetic element 32, 34 positioned along the perimeter edge 24.

According to the example shown in the figures, the table 1 preferably comprises four pairs of magnetic elements 32, 34 positioned on the perimeter edge 24 in proximity to the four corresponding corners of the top 6.

Preferably, four magnetic elements 32 of said pairs of said magnetic elements are positioned in such a way that they have their positive pole, indicated by the symbol "+" in the figures, facing towards the outside of the top 6 and the other four magnetic elements 34 of said pairs of said magnetic elements are positioned in such a way that they have their negative pole, indicated by the symbol "-" in the figures, facing towards the outside of the top 6.

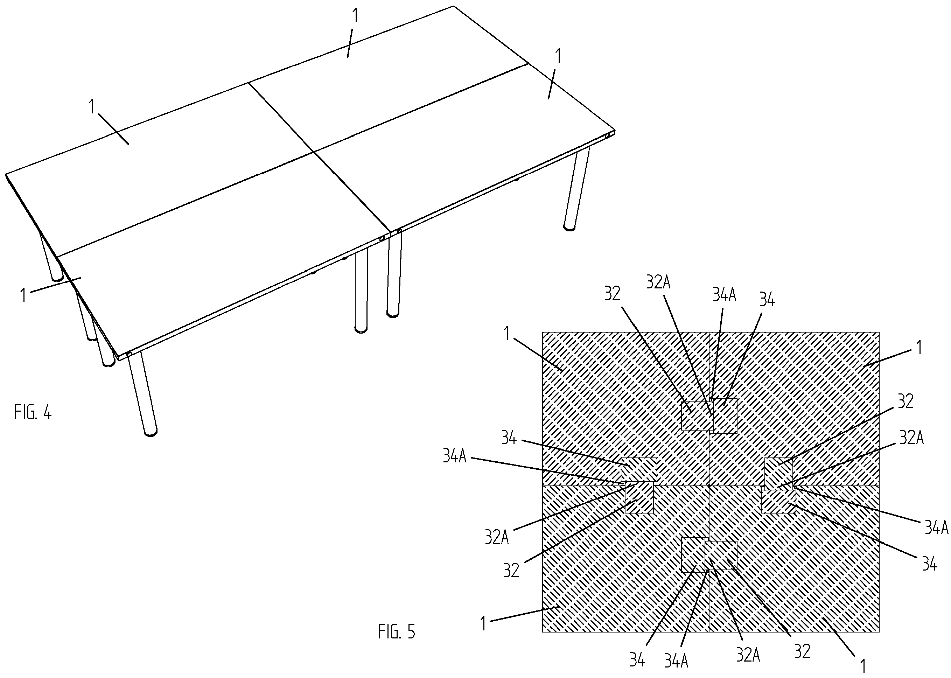

According to an example, the magnetic element 32, 34 is positioned on the perimeter edge 24 of the top 6 to cooperate with a magnetic or ferromagnetic element associated with the perimeter edge of another table, as shown for example in Figures 4 and 5.

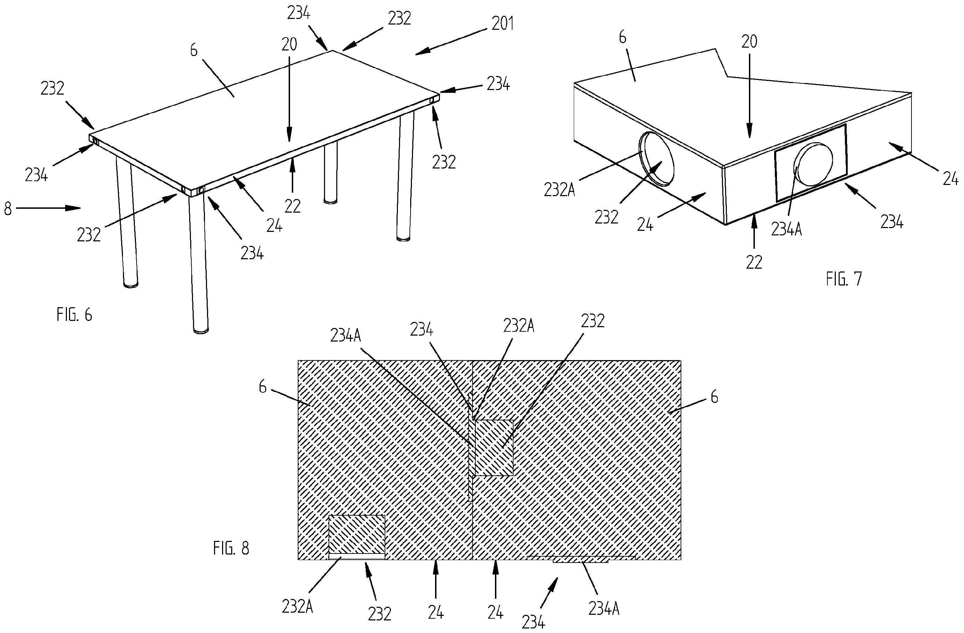

Preferably, a magnetic element 32 having the positive pole facing towards the outside of the table 1 is suited to cooperate with a magnetic element having the negative pole facing towards the outside of another table, as shown in Figure 4 or 5, or with a ferromagnetic element of another table like, for example, in the embodiment described below with reference to Figure 8.

Analogously, a magnetic element 34 having the negative pole facing towards the outside of the table 1 is suited to cooperate with a magnetic element having the positive pole facing towards the outside of another table, as shown in Figure 4 or 5, or with a ferromagnetic element of another table, as shown for example in Figure 8.

According to an example, when several tables are positioned side by side/rested against each other along the respective perimeter edges in order to be mutually joined/assembled, the mutual magnetic attraction between the magnetic elements of adjacent tables (Figure 4), or the magnetic attraction between the magnetic and ferromagnetic elements of adjacent tables (Figure 8), allows the tables to be maintained in their mutual joined position, avoiding the undesired creation of slits between the facing perimeter edges of two adjacent tables.

Still to advantage, disassembly operations are facilitated, as it is simply sufficient to move two adjacent tables away from each other by exerting a predetermined force, if necessary by slightly inclining the two tables and the respective tops. According to the example shown in the figures, the magnetic elements 32 with the positive pole facing towards the outside are positioned in such a way that they have an external portion 32A that projects from the perimeter edge 24 of the table 1. Analogously, the magnetic elements 34 with the negative pole facing towards the outside are positioned in such a way that they define corresponding recessed seats 34A with respect to the perimeter edge 24 of the table 1.

Advantageously, when several tables 1 are joined, the external portions 32A of the magnetic elements 32A projecting from the perimeter edge 24 of a first table are inserted in corresponding recessed seats 34A of a perimeter edge 24 of an adjacent table.

This interaction defines an anti slide system between the perimeter edges 24 of adjacent tables, improving the mutual firm connection between the tables themselves.

In examples, however, the anti slide means may be absent, and the firm connection between the tables be obtained only through the magnetic attraction force between the magnetic and/or ferromagnetic elements of the tables.

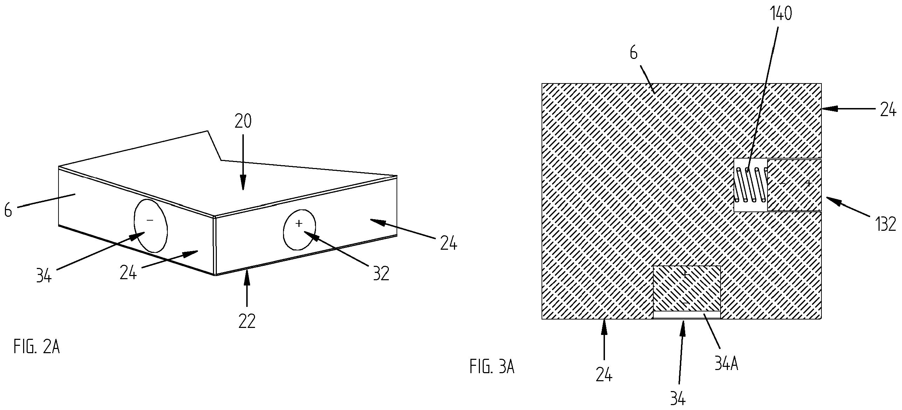

In this regard, as shown for example in the example of Figure 2A, the magnetic elements 32, 34 can be positioned in such a way as to be aligned or level with the perimeter edge 24 of the table 1.

In further variant examples, furthermore, the anti slide means may be made in a different way and in other areas of the perimeter edge with respect to the magnetic elements, for example with projecting shaped areas and recessed seats conveniently distributed on the perimeter edge so that they can interact with each other when several tables are placed side by side.

Figure 3A shows a further variant example that differs from the example described with reference to Figures from 1 to 3 in that it comprises return means 140 for the magnetic element 132 having the positive pole facing towards the outside which are suited to bring the magnetic element 132 itself to a retracted position with respect to the perimeter edge 24.

The return means 140 are conveniently sized to exert a return force 140 for the magnetic element 132, in such a way as to normally maintain it in the retracted position with respect to the perimeter edge 24 when the table 1 is not joined to other tables, while it allows it to be positioned so that it projects from the perimeter edge 24 when the table is joined to another table and subjected to the attraction force towards the other table.

Advantageously, when the table 1 is used alone there are no elements projecting from the perimeter edge 24.

It should be noted that the polarity of the magnetic elements as described above is not binding and the magnetic elements can be assembled with opposite polarity with respect to the description provided above, and this will not affect the results and/or advantages mentioned above.

Figures from 6 to 8 show a variant example of a table 201, not according to the invention.

Characteristics and/or component parts corresponding or equivalent to those of the preceding embodiments are identified by the same reference numbers.

The table 201 comprises a preferably rectangular top 6 and a supporting structure 8 for said top 6, preferably made up of four legs.

The top 6 comprises an upper support surface 20, an underside 22 and a perimeter edge 24 that joins the upper surface 20 to the underside 22.

According to the example, the table 201 comprises at least one magnetic element 232 positioned along the perimeter edge 24.

According to the embodiment shown in the figures, the table 1 preferably comprises four magnetic elements 232 positioned on the perimeter edge 24 in proximity to the four corresponding corners of the top 6.

The four magnetic elements 232 are positioned in such a way that they can have either their positive pole or their negative pole facing towards the outside of the top 6.

According to the example, the table 201 furthermore comprises at least one ferromagnetic element 234 positioned along the perimeter edge 24, preferably an iron element.

According to the embodiment shown in the figures, the table 1 preferably comprises four ferromagnetic elements 234 also positioned on the perimeter edge 24 in proximity to the four corresponding corners of the top 6.

At the level of each corner there are preferably a magnetic element 232 and a ferromagnetic element 234 positioned on adjacent sides of the top 6, as can be seen in Figure 7.

According to the example, the magnetic elements 232 are positioned on the perimeter edge 24 of the top 6 to cooperate with a ferromagnetic element 234 associated with the perimeter edge of another table, as shown for example in Figure 8.

Analogously to what has been explained with reference to the preceding examples, therefore, when several tables are positioned side by side/rested against each other along the respective perimeter edges in order to be mutually joined/assembled, the magnetic attraction between the magnetic and ferromagnetic elements of adjacent tables allows the tables to be maintained in their mutual position, avoiding the undesired creation of slits between two adjacent tables.

Furthermore, also disassembly operations are simple and easy.

According to the examples shown in the figures, the ferromagnetic elements 234 preferably have an external portion 234A that projects from the perimeter edge 24 of the table 201. Analogously, the magnetic elements 232 are positioned in such a way as to define corresponding recessed seats 232A with respect to the perimeter edge 24 of the table 201.

Advantageously, when several tables 1 are joined, the external projecting portions 234A of the ferromagnetic elements 234A of a first table are inserted in corresponding recessed seats 232A of a perimeter edge 24 of an adjacent table, defining an anti slide system between the perimeter edges 24 of the adjacent tables, as better shown in Figure 8.

In a preferred variant example, the recessed seats may be created at the level of the ferromagnetic elements, while the magnetic elements may have a projecting portion.

In variant embodiments, however, the anti slide means may be absent, and in this case the firm connection between the tables be obtained only through the magnetic attraction force between magnetic and ferromagnetic elements.

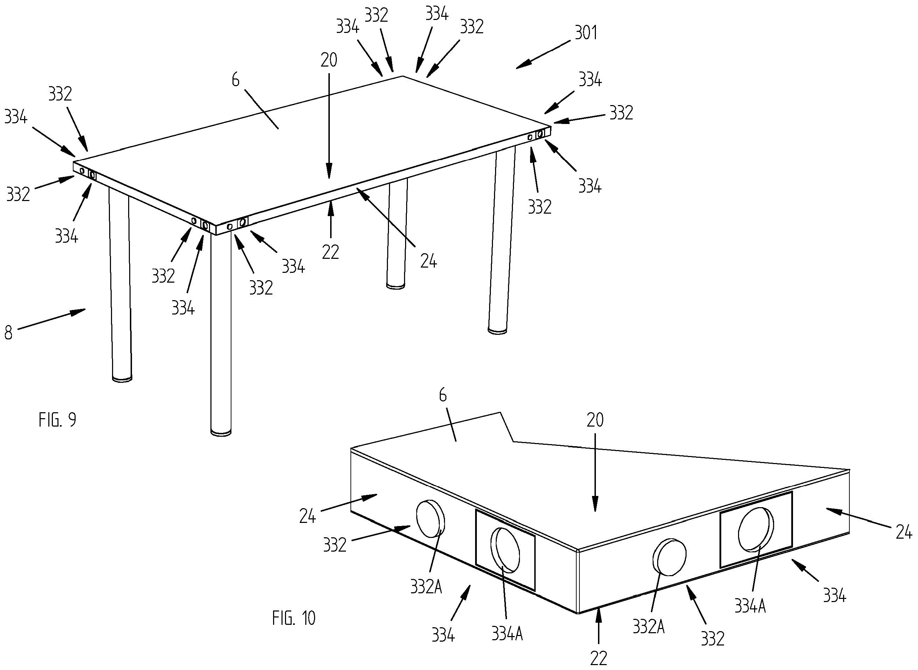

Figures 9 and 10 show a variant example of a table 301, not according to the invention.

Characteristics and/or component parts corresponding or equivalent to those of the preceding embodiments are identified by the same reference numbers.

The table 301 comprises a preferably rectangular top 6 and a supporting structure 8 for said top 6, preferably made up of four legs.

The top 6 comprises an upper support surface 20, an underside 22 and a perimeter edge 24 that joins the upper surface 20 to the underside 22.

According to an aspect of the example, the table 301 comprises at least one magnetic element 332 positioned along the perimeter edge 24.

According to the example shown in the figures, the table 1 preferably comprises eight magnetic elements 332 positioned on the perimeter edge 24 in proximity to the four corresponding corners of the top 6.

The eight magnetic elements 332 are positioned in such a way that they can have either their positive pole or their negative pole facing towards the outside of the table 301.

According to an aspect of the example, the table 301 furthermore comprises at least one ferromagnetic element 334 positioned along the perimeter edge 24.

According to the example shown in the figures, the table 1 preferably comprises eight ferromagnetic elements 334 also positioned on the perimeter edge 24 in proximity to the four corresponding corners of the top 6, as can be seen in Figure 10.

According to an aspect of the present example, the magnetic elements 332 are positioned on the perimeter edge 24 of the top 6 to cooperate with a ferromagnetic element 334 associated with the perimeter edge of another table. Analogously to what has been explained with reference to the preceding examples, therefore, when several tables are positioned side by side/rested against each other along the respective perimeter edges in order to be mutually joined/assembled, the magnetic attraction between the magnetic and ferromagnetic elements of adjacent tables allows the tables to be maintained in their mutual position, avoiding the undesired creation of slits between two adjacent tables.

According to the preferred example shown in the figures, the magnetic elements 332 have an external portion 332A that projects from the perimeter edge 24 of the table 301. Analogously, the ferromagnetic elements 334 are shaped in such a way as to define corresponding recessed seats 334A with respect to the perimeter edge 24 of the table 301.

Advantageously, when several tables 301 are joined, the external projecting portions 332A of the magnetic elements 332 of a first table are inserted in corresponding recessed seats 334A of a perimeter edge 24 of an adjacent table, defining an anti slide system between the perimeter edges 24 of the adjacent tables.

Figures from 11 to 15 show an embodiment of a table 401 according to the invention.

Characteristics and/or component parts corresponding or equivalent to those of the preceding embodiments are identified by the same reference numbers.

The table 401 comprises a preferably rectangular top 6 and a supporting structure 8 for said top 6, preferably made up of four legs.

According to an aspect of the present invention, the table 401 comprises at least one first magnetic element (432, 434), and at least one second magnetic element (432, 434) or at least one ferromagnetic element; positioned along the perimeter edge 24.

According to the embodiment shown in the figures, the table 401 preferably comprises four pairs of magnetic elements 432, 434 positioned on the perimeter edge 24 in proximity to the four corresponding corners of the top 6.

Preferably, four magnetic elements 432 of said pairs of said magnetic elements are positioned in such a way that they have their positive pole, indicated by the symbol "+" in the figures, facing towards the outside of the top 6 and the other four magnetic elements 434 of said pairs of said magnetic elements are positioned in such a way that they have their negative pole, indicated by the symbol "-" in the figures, facing towards the outside of the top 6.

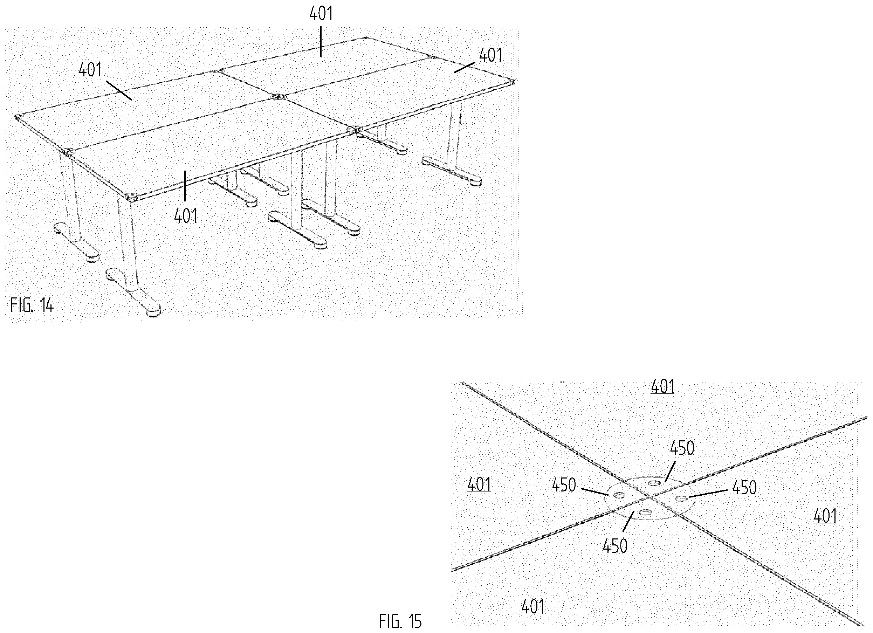

According to an aspect of the present invention, the magnetic element 432, 434 is positioned on the perimeter edge 24 of the top 6 to cooperate with a magnetic or ferromagnetic element associated with the perimeter edge of another table, as shown in Figures 14 and 15.

Preferably, a magnetic element 432 having the positive pole facing towards the outside of a table 401 is suited to cooperate with a magnetic element having the negative pole facing towards the outside of another table.

Analogously, a magnetic element 434 having the negative pole facing towards the outside of a table 401 is suited to cooperate with a magnetic element having the positive pole facing towards the outside of another table.

According to an advantageous aspect of the invention, when several tables are positioned side by side/rested against each other along the respective perimeter edges in order to be mutually joined/assembled, the mutual magnetic attraction between the magnetic elements of adjacent tables, as shown in Figure 14, allows the tables to be maintained in their mutual position, avoiding the undesired creation of slits between two adjacent tables.

According to the preferred embodiment shown in the figures, a magnetic element 432 having the positive pole facing towards the outside of the top 6 and a magnetic element 434 having the negative pole facing towards the outside of the top 6 are associated with a supporting element 450 connected to the perimeter edge 24 of the top 6. The supporting element 450 is preferably made of a non-ferromagnetic material, more preferably a non-ferromagnetic metallic material, such as aluminium or other materials, like plastic materials or wood-based materials or similar materials.

Preferably, the supporting element 450 has an angular shape, preferably the shape of a 90° angle, for the assembly of the magnetic elements 432, 434 at the level of a corner of the top 6.

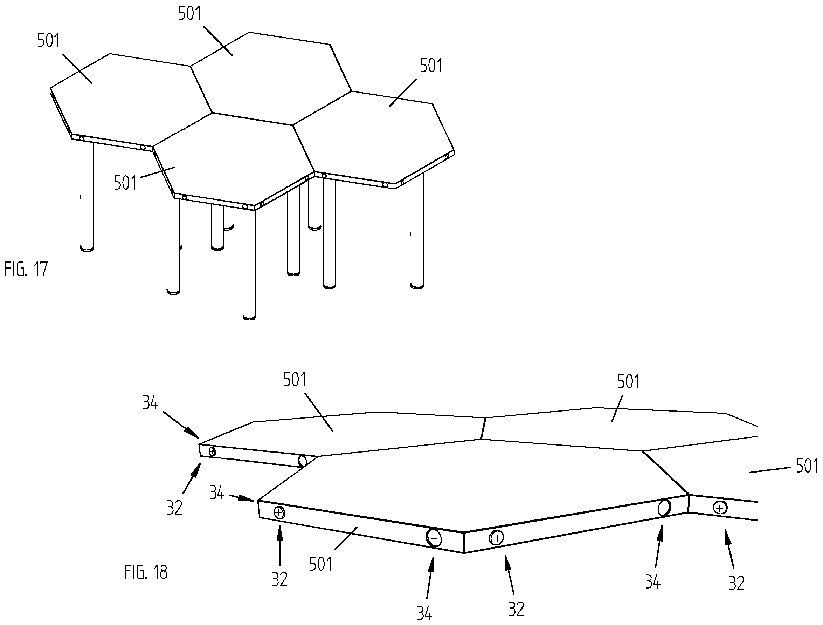

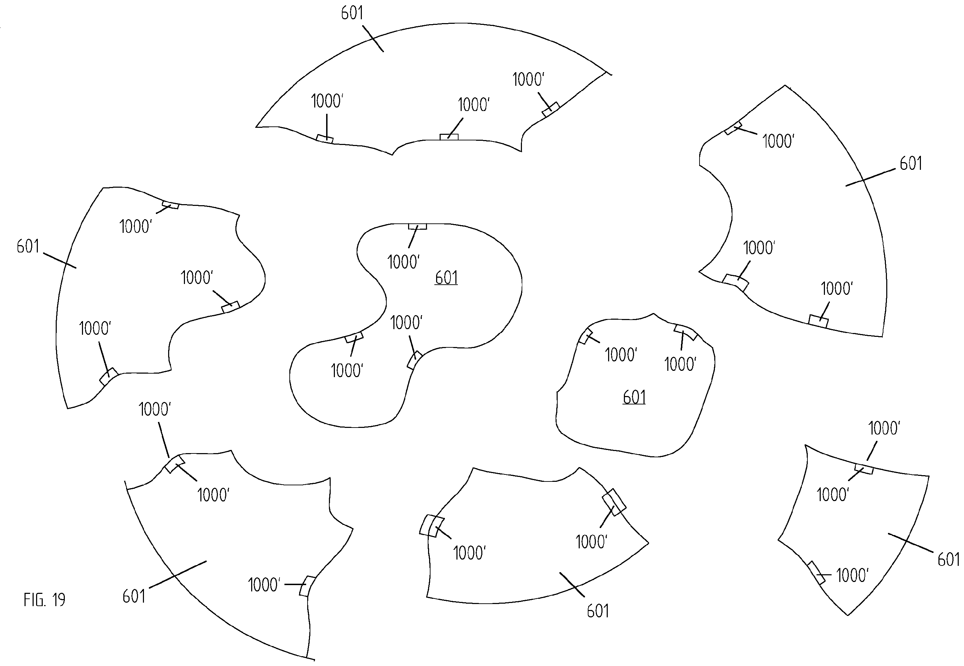

Obviously, in variant embodiments the supporting element may have a different shape, so that it can adapt to the shape of the area of the top to which it is connected, not necessarily the shape of a 90° angle, as shown for example in Figures 17 and 19.

According to the invention, the supporting element 450 comprises a first portion 452 that adheres to the perimeter edge 24 and a second portion 454 that extends at least partially over the upper surface 20 of the top 6.

The first portion 452 has a first side 452A suited to receive the first magnetic element 432 and a second side 452B suited to receive the second magnetic element 434.

The first and the second side 452A, 452B are preferably arranged at 90° with respect to each other.

The first magnetic element 432 is housed in a first seat 458A of the first side 452A to which the first magnetic element 432 is preferably fixed by means of a screw 456A, preferably made of a ferromagnetic material.

The first magnetic element 432 is housed in the first seat 458A in such a way as to define a recessed seat 432A with respect to the perimeter edge 24 of the table 401 (Figure 12).

The second magnetic element 434 is housed in a second seat 458B of the second side 452B to which the second magnetic element 432 is preferably fixed by means of a screw 456B, preferably made of a ferromagnetic material.

The first magnetic element 432 is housed in the second seat 458A in such a way that it has an external portion 434A that projects from the perimeter edge 24 of the table 1 (Figure 12).

Advantageously, as explained above, when several tables 401 are joined the external projecting portions 434A of the magnetic elements 434A of the perimeter edge 24 of a first table are inserted in corresponding recessed seats 432A of the perimeter edge 24 of an adjacent table.

Preferably, the supporting element 450 comprises at least one recessed seat 460 defined in the second portion 454.

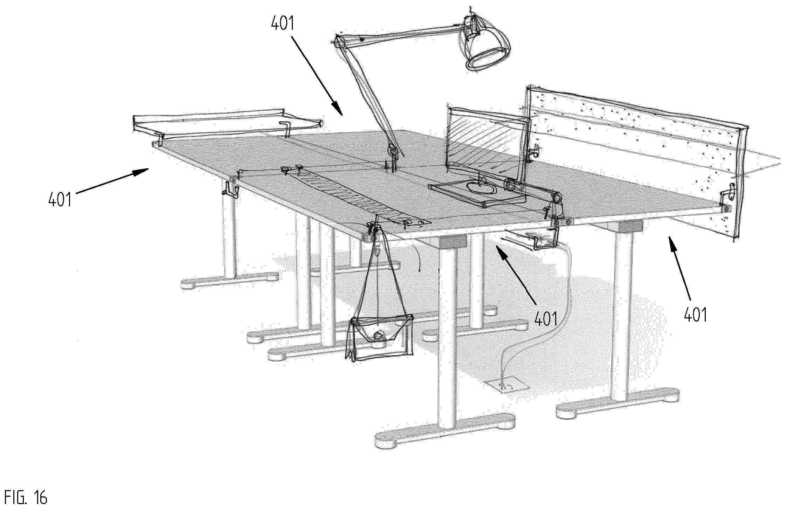

More preferably, the recessed seat 460 comprises a cylindrical hole that extends from the upper support surface 20 towards the underside 22 of the top 6. Advantageously, the recessed seat 460 can be used to equip the table 401 for various uses, as shown for example in the assembly of Figure 16 comprising four tables 401 joined to one another.

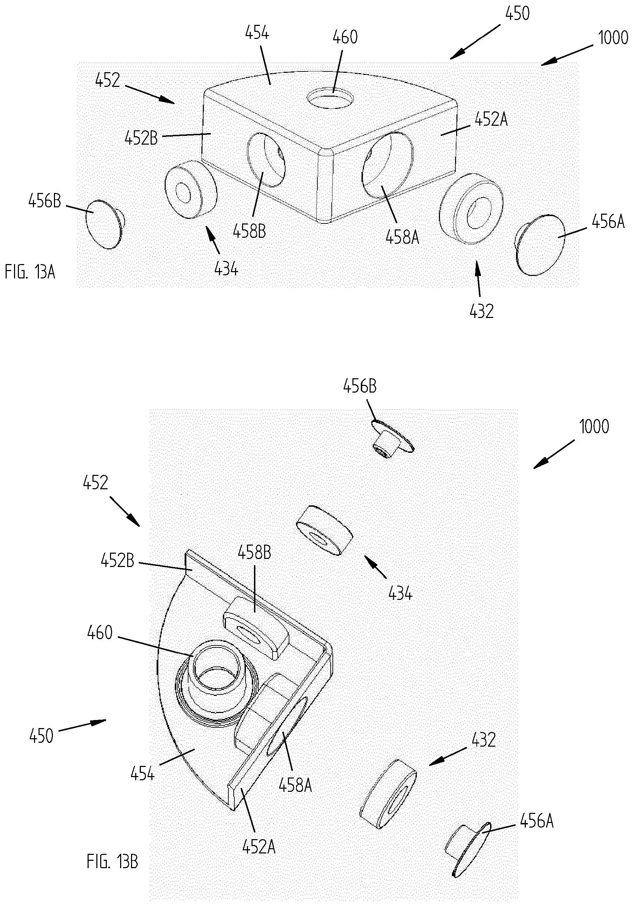

It should be noted how the assembly 1000 constituted by the supporting element 450 and by the magnetic elements 432, 434, as shown for example in Figure 13, defines a connection device that is suited to be applied to a table 401 in order to allow the table 401 itself to be connected/joined to other tables preferably provided with at least one identical connection device 1000.

It should furthermore be noted, that according to the invention the magnetic elements and/or the ferromagnetic elements can be an integral part of a connection device suited to be applied to a table, instead of being an integral part of the table, as shown above.

In this way, any table of the known type can be equipped with a connection device according to the invention in order to allow it to be connected to other tables according to the procedures explained above. Figures 17 and 18 show a variant embodiment of a table 501 not according to the invention, in addition to the possible union of four of said tables 501.

Each table 501 has an hexagonal shape and at each corner of the table 501 there is a pair of conveniently polarized magnetic elements, analogously to what has been described above. The magnetic elements of each pair are in this case positioned at 120° with respect to each other.

According to the above, in a preferred alternative embodiment, the pair of magnetic elements may be part of a connection device suited to be applied to a corner of the table. Preferably, in this case, the connection device will have an angular shape with two sides substantially arranged at 120° and suited to receive the respective magnetic elements.

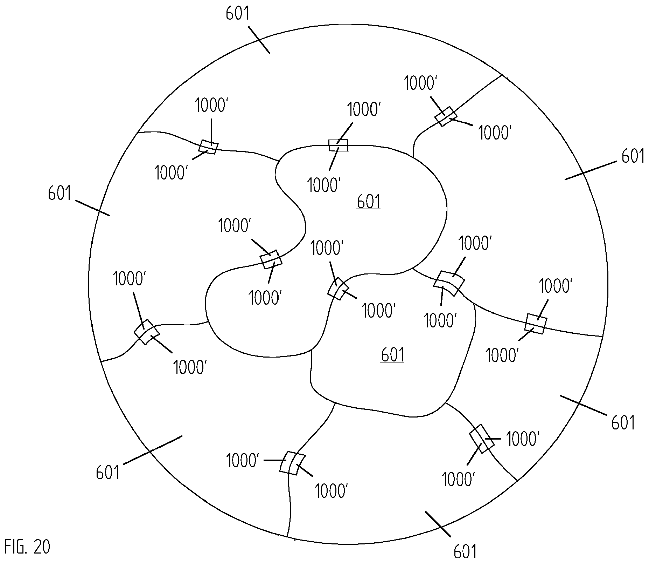

Figure 19 shows a variant embodiment of several tables 601 not according to the invention, in addition to a possible union of the same tables 601, shown in Figure 20, not according to the invention. The tables 601 have different shapes and are shaped in such a way that if joined they create a circular assembly. Preferably, each table 601 is provided with one or more connection devices 1000' according to the invention.

The above thus shows that the table and the device of the invention make it possible to achieve the set objects and in particular, compared to the systems of the known art, make it possible to facilitate the operations required to join/assemble several tables.

Even though the present invention has been illustrated above by means of the detailed description of embodiments of the same illustrated in the drawings, the present invention is not limited to the embodiments described above and illustrated in the drawings; on the contrary, further variants of the embodiments described above fall within the scope of the present invention, scope which is defined in the claims.

## Claims

1. Table with a connection device (1000; 1000') suited to be applied to a top (6) of the table (401; 601) with a perimeter edge (24), in order to allow said table (401; 601) to be connected to another table (401; 601), comprising:
- at least one first magnetic element (432, 434 and
- at least one second magnetic element (432, 434) or at least one ferromagnetic element, and
- a supporting element (450), wherein the supporting element (450) comprises a first portion (452) that adheres to the perimeter edge (24) and a second portion (454) that extends at least partially over the top (6), wherein said first portion (452) has a first side (452A) configured to receive said at least one first magnetic element (432, 434), wherein said first magnetic element (432, 434) is housed in a first seat (458A) of the first side (452A),
wherein said first portion (452) has a second side (452B) configured to receive said at least one second magnetic element (432, 434) or said at least one ferromagnetic element, wherein said second magnetic element (432, 434), or said at least one ferromagnetic element, is housed in a second seat (458B) of the second side (452B).

2. Table with a connection device (1000; 1000') according to claim 1, **characterized in that** said first magnetic element (432, 434) is positioned on said supporting element (450) in such a way that it has the positive polarity or the negative polarity facing towards the outside with respect to said top (6) when said device (1000; 1000') is installed on said top (6).

3. Table with a connection device (1000; 1000') according to claim 2, **characterized in that** said second magnetic element (432, 434) is positioned on said supporting element (450) in such a way that it has, towards the outside of said top (6), polarity opposite to the polarity of said first magnetic element (432, 434) towards the outside with respect to said top (6), when said device (1000; 1000') is installed on said top (6).

4. Table with a connection device (1000; 1000') according to any of the claims from 1 to 3, **characterized in that** it comprises anti slide means suited to prevent said perimeter edge (24) from sliding with respect to the perimeter edge (24) of another table (401; 601), when said device (1000; 1000') is installed on said top (6).

5. Table with a connection device (1000; 1000') according to claim 4, **characterized in that** said anti slide means comprise a portion that projects from said supporting element (450) or a portion that is recessed into said supporting element (450).

6. Table with a connection device (1000; 1000') according to any of the claims from 1 to 5, **characterized in that** it comprises return means for said first magnetic element and/or said second magnetic element which are suited to bring said first magnetic element and/or said second magnetic element to a retracted position with respect to said supporting element.

7. Table with a connection device (1000; 1000') according to any of the claims from 1 to 6,
**characterized in that** said supporting element (450) comprises at least one recessed seat (460) defined in said second portion (454).

## Patentansprüche

1. Tisch mit einer Verbindungsvorrichtung (1000; 1000'), die geeignet ist, an einer Platte (6) des Tisches (401; 601) mit einer Umfangskante (24) angebracht zu werden, um zu ermöglichen, dass der besagte Tisch (401; 601) mit einem anderen Tisch (401; 601) verbunden werden kann, umfassend:
- mindestens ein erstes magnetisches Element (432, 434) und
- mindestens ein zweites magnetisches Element (432, 434) oder mindestens ein ferromagnetisches Element, und
- ein Stützelement (450), wobei das Stützelement (450) einen ersten Abschnitt (452), der an der Umfangskante (24) haftet, und einen zweiten Abschnitt (454) umfasst, der sich zumindest teilweise über die Platte (6) erstreckt,
wobei der besagte erste Abschnitt (452) eine erste Seite (452A) aufweist, die ausgeführt ist, um das besagte mindestens eine erste magnetische Element (432, 434) aufzunehmen, wobei das besagte erste magnetische Element (432, 434) in einem ersten Sitz (458A) der ersten Seite (452A) untergebracht ist,
wobei der besagte erste Abschnitt (452) eine zweite Seite (452B) aufweist, die ausgeführt ist, um das besagte mindestens eine zweite magnetische Element (432, 434) oder das besagte mindestens eine ferromagnetische Element aufzunehmen, wobei das besagte zweite magnetische Element (432, 434) oder das besagte mindestens eine ferromagnetische Element in einem zweiten Sitz (458B) der zweiten Seite (452B) untergebracht ist.

2. Tisch mit einer Verbindungsvorrichtung (1000; 1000') nach Patentanspruch 1, **dadurch gekennzeichnet, dass** das besagte erste magnetische Element (432, 434) auf dem besagten Stützelement (450) so positioniert ist, dass es die positive Polarität oder die negative Polarität nach außen in Bezug auf die besagte Platte (6) gerichtet aufweist, wenn die besagte Vorrichtung (1000; 1000') auf der besagten Platte (6) installiert ist.

3. Tisch mit einer Verbindungsvorrichtung (1000; 1000') nach Patentanspruch 2, **dadurch gekennzeichnet, dass** das besagte zweite magnetische Element (432, 434) auf dem besagten Stützelement (450) so positioniert ist, dass es zur Außenseite der besagten Platte (6) die Polarität entgegen der Polarität des besagten ersten magnetischen Elements (432, 434) nach außen in Bezug auf die besagte Platte (6) gerichtet aufweist, wenn die besagte Vorrichtung (1000; 1000') auf der besagten Platte (6) installiert ist.

4. Tisch mit einer Verbindungsvorrichtung (1000; 1000') nach jeglichem der Patentansprüche 1 bis 3, **dadurch gekennzeichnet, dass** er Gleitschutzmittel umfasst, die geeignet sind, ein Gleiten der besagten Umfangskante (24) in Bezug auf die Umfangskante (24) eines anderen Tisches (401; 601) zu verhindern, wenn die besagte Vorrichtung (1000; 1000') auf der besagten Platte (6) installiert ist.

5. Tisch mit einer Verbindungsvorrichtung (1000; 1000') nach Patentanspruch 4, **dadurch gekennzeichnet, dass** die besagten Gleitschutzmittel einen Teil umfassen, der aus dem besagten Stützelement (450) herausragt, oder einen Teil, der in das besagte Stützelement (450) eingelassen ist.

6. Tisch mit einer Verbindungsvorrichtung (1000; 1000') nach jeglichem der Patentansprüche 1 bis 5, **dadurch gekennzeichnet, dass** er Rückstellmittel für das besagte erste magnetische Element und/oder das besagte zweite magnetische Element umfasst, die geeignet sind, das besagte erste magnetische Element und/oder das besagte zweite magnetische Element in eine zurückgezogene Position in Bezug auf das besagte Stützelement zu bringen.

7. Tisch mit einer Verbindungsvorrichtung (1000; 1000') nach jeglichem der Patentansprüche 1 bis 6, **dadurch gekennzeichnet, dass** das besagte Stützelement (450) mindestens einen in dem besagten zweiten Abschnitt (454) definierten versenkten Sitz (460) aufweist.

## Revendications

1. Table avec un dispositif de connexion (1000 ; 1000') indiqué pour être appliqué sur un dessus (6) de la table (401 ; 601) avec un bord de périmètre (24), afin de permettre à ladite table (401 ; 601) d'être reliée à une autre table (401 ; 601), comprenant :
- au moins un premier élément magnétique (432, 434) et
- au moins un deuxième élément magnétique (432, 434) ou au moins un élément ferromagnétique, et
- un élément de support (450), où l'élément de support (450) comprend une première portion (452) qui adhère au bord de périmètre (24) et une deuxième portion (454) qui s'étend au moins partiellement sur le dessus (6),
où ladite première portion (452) présente un premier côté (452A) configuré de manière à recevoir ledit au moins un premier élément magnétique (432, 434), où ledit premier élément magnétique (432, 434) est logé dans un premier siège (458A) du premier côté (452A),
où ladite première portion (452) présente un deuxième côté (452B) configuré de manière à recevoir ledit au moins un deuxième élément magnétique (432, 434) ou ledit au moins un élément ferromagnétique, où ledit deuxième élément magnétique (432, 434), ou ledit au moins un élément ferromagnétique, est logé dans un deuxième siège (458B) du deuxième côté (452B).

2. Table avec un dispositif de connexion (1000 ; 1000') selon la revendication 1, **caractérisée en ce que** ledit premier élément magnétique (432, 434) est positionné sur ledit élément de support (450) de telle manière qu'il présente la polarité positive ou la polarité négative tournée vers l'extérieur par rapport audit dessus (6) lorsque ledit dispositif (1000 ; 1000') est installé sur ledit dessus (6).

3. Table avec un dispositif de connexion (1000 ; 1000') selon la revendication 2, **caractérisée en ce que** ledit deuxième élément magnétique (432, 434) est positionné sur ledit élément de support (450) de telle manière qu'il présente, vers l'extérieur dudit dessus (6), une polarité opposée à la polarité dudit premier élément magnétique (432, 434) vers l'extérieur par rapport audit dessus (6), lorsque ledit dispositif (1000 ; 1000') est installé sur ledit dessus (6).

4. Table avec un dispositif de connexion (1000 ; 1000') selon l'une quelconque des revendications de 1 à 3, **caractérisée en ce qu'**elle comprend des moyens anti-glissement indiqués pour empêcher que ledit bord de périmètre (24) glisse par rapport au bord de périmètre (24) d'une autre table (401 ; 601), lorsque ledit dispositif (1000 ; 1000') est installé sur ledit dessus (6).

5. Table avec un dispositif de connexion (1000 ; 1000') selon la revendication 4, **caractérisée en ce que** lesdits moyens anti-glissement comprennent une portion qui fait saillie dudit élément de support (450) ou une portion qui est encastrée dans ledit élément de support (450).

6. Table avec un dispositif de connexion (1000 ; 1000') selon l'une quelconque des revendications de 1 à 5, **caractérisée en ce qu'**elle comprend des moyens de retour pour ledit premier élément magnétique et/ou ledit deuxième élément magnétique qui sont indiqués pour amener ledit premier élément magnétique et/ou ledit deuxième élément magnétique dans une position rétractée par rapport audit élément de support.

7. Table avec un dispositif de connexion (1000 ; 1000') selon l'une quelconque des revendications de 1 à 6, **caractérisée en ce que** ledit élément de support (450) comprend au moins un siège encastré (460) défini dans ladite deuxième portion (454).
